# EUROPÄISCHE PATENTSCHRIFT

(11) **EP 3 812 317 B1**
(45) Veröffentlichungstag und Bekanntmachung des Hinweises auf die Patenterteilung: **19.04.2023**
(21) Anmeldenummer: 20216090.9
(22) Anmeldetag: 08.12.2016
(51) Int. Cl.: B65G 47/248, B29C 49/42, B65G 11/06

(54) **VORRICHTUNG ZUM FÜHREN UND VERSCHWENKEN VON KÖRPERN, ANLAGE UND BEHANDLUNGSLINIEN FÜR PET-BEHÄLTER**
DEVICE FOR GUIDING AND PIVOTING BODIES, INSTALLATION AND TREATMENT LINES FOR PET CONTAINERS
DISPOSITIF POUR GUIDER ET FAIRE PIVOTER DES CORPS, INSTALLATION ET LIGNES DE TRAITEMENT POUR RÉCIPIENTS EN PET

(30) Priorität: 22.01.2016 DE 102016200908
(43) Veröffentlichungstag der Anmeldung: 28.04.2021
(62) Teilanmeldung aus: 16809769.9
(73) Patentinhaber: Krones AG, 93073 Neutraubling (DE)
(72) Erfinder: KILGENSTEIN, Torsten, 93073 Neutraubling (DE); MEIER, Matthias, 93073 Neutraubling (DE); HUETTNER, Johann, 93073 Neutraubling (DE); FIEGLER, Rudolf, 93073 Neutraubling (DE); ORTNER, Reinhard, 93073 Neutraubling (DE); SEIDEL, Ulrich, 93073 Neutraubling (DE); GADOMSKI, Hendrik, 93073 Neutraubling (DE)
(74) Vertreter: Grünecker Patent- und Rechtsanwälte PartG mbB

(56) Entgegenhaltungen:
- DE-U1-202008 002 349
- DE-U1-202013 007 104
- FR-A1- 2 930 241
- NL-A- 7 003 812
- US-A- 4 343 575
- US-A- 4 479 574
- US-A- 5 609 237

## Beschreibung

Die Erfindung betrifft eine Vorrichtung zum Führen und Verschwenken von Körpern, wie z.B. Dosen, Flaschen, Preforms, Flaschenverschlüssen, Behältern aus Karton oder Kolben, um eine Achse parallel zu einer Transportrichtung der Körper gemäß Anspruch 1, eine Anlage gemäß Anspruch 11, eine Behandlungslinie gemäß Anspruch 14 und eine Behandlungslinie gemäß Anspruch 15.

### Stand der Technik

Es ist bekannt, kreiszylindrische Körper, die in eine Richtung transportiert werden, mittels einer Wendeeinrichtung um ihre Hochachse zu drehen. In der getränkeverarbeitenden Industrie kann eine solche Drehung für unterschiedliche Behandlungsschritte von Behältern erforderlich sein. Dazu gehören zum Beispiel die Reinigung des Innenraums der Behälter, die Sicherstellung, dass das Reinigungsmedium abfließen kann oder auch eine Beschriftung des Behälterbodens.

Im Stand der Technik sind so genannte Freilaufwender und Drängelwender bekannt. Freilaufwender weisen ein Gefälle auf, so dass durch die Gewichtskraft verbunden mit der Kontaktierung durch die Vorrichtung, die Behälter gedreht werden. Drängelwender weisen kein Gefälle auf, und die Drehung der Behälter erfolgt hier aufgrund des Staudrucks der nachfolgenden Behälter.

DE 20 2011 005 686 U1 offenbart eine Wendevorrichtung bei der vier miteinander verbundene Elemente mit Ausnehmungen für die Bewegungsbahn vorgesehen sind, wobei jedes der vier Elemente quaderförmig mit den entsprechenden Ausnehmungen ist, wobei die vier Elemente sich jeweils über die gesamte Länge der Bewegungsbahn parallel zur Bewegungsrichtung erstrecken und wobei je zwei Elemente mit Flächen aneinander angrenzen, die parallel zur Bewegungsrichtung der Behälter angeordnet sind. Jedes der Bauelemente übernimmt auf seiner von der Kante abgewandten Seite die Formgebung für den Kanal, der die Wendung, Drehung oder sonstige Positionsänderung des Behälters während des Fördervorgangs parallel zu den Kanten sicherstellt. An den Übergangsstellen der Elemente entstehen Stoßstellen, die den Behälterfluss stören und die Behälter beschädigen können.

EP 0 070 195 A2 offenbart eine Wendevorrichtung bestehend aus ungefähr 50 bis 70 Scheiben, die parallel zueinander angeordnet sind. Jede dieser Scheiben besitzt im mittleren Bereich eine Aussparung in einer bestimmten Form. Von Scheibe zu Scheibe unterscheidet sich die Form geringfügig. Eine Dose, die in die erste Scheibe in einer bestimmten Position einfährt, trifft auf eine Aussparung, die im Wesentlichen der Dosenform entspricht. In der nächsten Scheibe ist die Aussparung ebenfalls der Dosenform angepasst, aber in einer bestimmten Neigung. Dies setzt sich dann in der dritten Scheibe fort. Nach dem Passieren aller 50 bis 70 Scheiben ist die Dose dann um 180° oder einen anderen vorgegebenen Winkel gedreht. Hierbei stören eine Vielzahl von Stoßstellen den Behälterfluss und können die Behälter beschädigen.

DE 2 301 524 offenbart eine Vorrichtung zum Transport von Gegenständen mit einer käfigartigen Führung, die eine Anzahl paralleler Leisten aufweist, die in Abständen längs des Weges der Gegenstände an Rahmenelementen befestigt sind. Ein Abschnitt der käfigartigen Führung kann hierbei um die Achse des Transportwegs der Behälter verdreht sein, so dass die in aufrechter Stellung auf der einen Seite in den Führungsabschnitt eintretenden Behälter während des Durchlaufs durch diesen Führungsabschnitt aus ihrer vertikalen Orientierung gedreht werden und an der anderen Seite des Führungsabschnitts in gekippter Stellung austreten. Die Vorrichtung besteht aus einer Vielzahl von Einzelteilen und beweglichen Komponenten, wodurch bei Verschmutzungen Probleme hinsichtlich der Hygiene auftreten können, da eine Reinigung nur eingeschränkt möglich ist.

US 4,479,574 offenbart eine Behältertransportvorrichtung mit einer im Wesentlichen rechteckigen Rahmenstruktur und flachen Führungsstrukturen, die sich aufwärts von der Rahmenstruktur erstrecken und deren untere Teile starr mit der Rahmenstruktur verbunden sind. Jede der Führungsstrukturen hat eine zentriert angeordnete Öffnung, die in Größe und Form derart ausgelegt sind, um die Behälter aufzunehmen. Die Behälterführungsmittel umfassen einen Eingangswindungsteil, einen daran anschließenden Zwischenteil und einen an den Zwischenteil anschließenden Ausgangswindungsteil.

DE 20 2013 007104 U1 offenbart eine Vorrichtung mithilfe der ein Behältnisverschluss von einer bestimmten ersten Ausrichtungslage in eine von der ersten Ausrichtungslage unterschiedliche - bestimmte - zweite Ausrichtungslage bewegbar ist. Die Vorrichtung weist mindestens einen Führungskanal mit mindestens einer Eintritts- und mindestens einer Austrittsöffnung auf, wobei der Führungskanal zwischen der Ein- und Austrittsöffnung zumindest teilweise bogenförmig, verdreht und/oder spiralförmig verlaufend ausgebildet ist.

Der Führungskanal kann durch Wandungen im Wesentlichen nahezu vollständig begrenzt sein. Alternativ können die Wandungen so ausgebildet werden, dass ein entlang des Umfangs nicht geschlossener Führungskanal ausgebildet ist, der als eine Führungsschiene anzusehen ist. In den seitlichen Bereichen des Führungskanals sind Druckluftkanäle ausgebildet, die im Wesentlichen parallel zum Führungskanal verlaufen.

DE 20 2008 002349 U1 offenbart eine Vorrichtung zum Wenden von kontinuierlich geförderten Produkten in einer Förderanlage mit einer Wendestrecke, die helix- oder spiralförmig ausgebildet ist. Die Wendevorrichtung ist mit Metallführungen in Form von Streben ausgestattet.

US 4 343 575 A offenbart eine Vorrichtung und ein Verfahren zum Ändern der Bewegungsrichtung und/oder der Ausrichtung von Behältern während ihrer Verarbeitung. Die Vorrichtung umfasst Mittel zum Erhalten von Behältern, ein gebogenes Rohr mit einem Innendurchmesser, der ausreichend groß ist, um einen Durchtritt der Behälter zu ermöglichen und Mittel, um einen Behälter mit dem Boden zuerst in den Einlass des Rohrs und in sein Inneres voranzutreiben.

FR 2 930 241 A1 offenbart eine Vorrichtung mit mehreren Schienen, die von einem Rahmen getragen werden, die eine Art Tunnel für das Ende der Vorformlinge auf der Seite des Halses bildet. Der Tunnel ist verdreht und die beiden Schienen, die als Führung dienen, haben einen Abstand, der zwischen dem Eingang und dem Ausgang des Tunnels konstant ist. Die eine Schiene ist gerade und die andere Schiene ist gekrümmt, wobei diese Schiene ein Profil aufweist, das zu dem zu befördernden Vorformling passt.

Eine Wendevorrichtung nach dem Stand der Technik wird im Allgemeinen kundenindividuell gefertigt und ist aufgrund der geringen Chargengröße (i. d. R. eine Stückzahl von eins) teuer. Bei der Fertigung muss häufig auf Mehrachswerkzeuge zurückgegriffen werden, um beispielsweise Hinterschneidungen bearbeiten zu können. Die Formgebung der Führungen (z.B. das Biegen von Stangen) von Wendevorrichtungen ist bis heute mit hohem manuellen Aufwand verbunden. Darüber hinaus ergibt sich ein großer Aufwand zur Sicherstellung der benötigten, engen Fertigungstoleranzen.

### Aufgabe

Die Aufgabe der Erfindung besteht darin, eine Vorrichtung zum Führen und Verschwenken von Körpern zur Verfügung zu stellen, die kundenindividuelle Anforderungen berücksichtigt und preisgünstig hergestellt werden kann.

### Lösung

Die Aufgabe wird gelöst durch die Vorrichtung nach Anspruch 1, die Anlage nach Anspruch 11, die Behandlungslinie nach Anspruch 14 und die Behandlungslinie nach Anspruch 15. Bevorzugte Ausführungsformen und Weiterbildungen sind in den Unteransprüchen offenbart.

Eine Vorrichtung zum Führen und Verschwenken von Körpern, wie z.B. Dosen, Flaschen, Preforms, Flaschenverschlüssen, Behältern aus Karton (insbesondere innen beschichte Kartons, wie z.B. Tetra Pak^{™}) oder Kolben, wobei das Führen und Verschwenken der Körper durch Gleiten der Körper an der Vorrichtung erfolgt, wird mithilfe eines generativen Fertigungsverfahrens hergestellt.

Die Bezeichnung "generatives Fertigungsverfahren", auch als Additive Fertigung bezeichnet, wird umfassend für die bisher meist als Rapid Prototyping bezeichneten Verfahren zur schnellen und kostengünstigen Fertigung von Modellen, Mustern, Prototypen, Werkzeugen und Endprodukten verwendet. Bei einem generativen Fertigungsverfahren erfolgt die Fertigung eines oder mehrerer Objekte direkt auf der Basis rechnerinterner Datenmodelle (Übergabe meist über die STL-Schnittstelle) aus formlosem (Flüssigkeiten, Pulver u. ä.) oder formneutralem (band-, drahtförmig) Material mittels chemischer und/oder physikalischer Prozesse. Obwohl es sich dabei um urformende Verfahren handelt, sind für die Fertigung eines konkreten Objekts keine speziellen Werkzeuge, wie Gussformen, erforderlich, denen die jeweilige Geometrie des herzustellenden Objekts inhärent ist oder die die jeweilige Geometrie des herzustellenden Objekts gespeichert haben.

Die generative Fertigung ermöglicht eine Integration von Anschlussbauteilen und Funktionen sowie die Reduktion von Einzelteilen im Vergleich zu herkömmlichen Fertigungsverfahren. Die Fertigung von Hinterschneidungen ist mit einem generativen Fertigungsverfahren einfach und verlässlich durchzuführen. Auch die Fertigung kleiner Stückzahlen einer erfindungsgemäßen Vorrichtung ist kostengünstiger. Zudem fällt bei der generativen Fertigung so gut wie kein Abfall an. Ebenso kann die Vorrichtung, z. B. durch Objektscan, genau an das Kundenobjekt (Körper) angepasst werden, so dass ein aufwändiges Nachbearbeiten bezüglich erforderlicher Toleranzen entfällt.

Für das generative Fertigungsverfahren kann ein 3D-Druck im Pulverbrettverfahren (z.B. selektives Laserschmelzen/-sintern (SLM/SLS), Selective Head Sintering (SHS), Binder Jetting, Elektronenstrahlschmelzen (EBM)), Freiraumverfahren (z.B. Fused Deposition Modeling (FDM), Laminated Object Modelling (LOM), Auftragsschweißen bzw. Cladding, Wax Deposition Modeling (WDM), Controur Crafting, Kaltgasspritzen, Elektronenstrahlschmelzen (EBW)), Flüssigmaterialverfahren (z.B. Stereolithografie (SLA), Mikro-SLA, Digital Light Processing (DLP), Liquid Composite Moulding (LCM)) oder Hybridverfahren (z.B. MPA-Verfahren der Firma Hermle, Laserauftragsschweißen mit integrierter Fräsbearbeitung) durchgeführt werden.

Die Vorrichtung kann mindestens einen Kunststoff oder mindestens ein Metall oder eine Mischung aus mindestens einem Kunststoff und mindestens einem Metall umfassen. Als Kunststoffe können beispielsweise PA12, PEI, PEEK, PA, UHMW-PE, stahlvernetzte Kunststoffe oder Kunststoffe mit beigemischten Feststoffen, wie z.B. Glas, verwendet werden. Als Metall können z.B. 1.4404, Aluminium, Titan oder andere am Markt erhältliche und für die generative Fertigung geeignete Metallpulver verwendet werden. Es kann vorgesehen sein, die Vorrichtung als hybrides Bauteil vorzusehen, wobei ein Teil der Vorrichtung in herkömmlicher Weise mit einem Spritzgussverfahren und ein anderer Teil der Vorrichtung mittels generativer Fertigung hergestellt werden.

In einer ersten Ausführungsform kann die Vorrichtung derart ausgebildet sein, dass sie im Zusammenwirken mit den Körpern diese formschlüssig in mindestens drei Oberflächenbereichen zum Führen und Verschwenken kontaktiert. Für die Kontaktierung können Führungsstangen vorgesehen sein, die so ausgebildet sind, dass sie ein kontinuierliches Verschwenken des Körpers um seine Längsachse unterstützen, während sich der Körper in der Vorrichtung in die Transportrichtung bewegt. Um das Führen und das Verschwenken des Körpers vornehmen zu können, kann jede der Führungsstangen eine glatte Kurve im dreidimensionalen Raum bilden. Die Bewegung in die Transportrichtung kann in einem Freilaufwender durch die an die Körper angreifende Gewichtskraft bzw. in einem Drängelwender durch den Staudruck nachfolgender Körper bedingt werden.

Die Vorrichtung kann beispielsweise eine Dose an deren Oberfläche formschlüssig in vier Oberflächenbereichen mit jeweils einem Führstangenbereich einer der vier Führungsstangen kontaktieren. Die Kontaktierung kann an dem geneigten Übergang von Mantelfläche zu Deckelfläche bzw. Bodenfläche erfolgen (auch so bezeichnet, wenn Deckel- bzw. Bodenfläche noch keinen Deckel bzw. Boden aufweisen). Die einzelnen Führungsstangen weisen zueinander einen konstanten Querabstand auf, der durch die Dimension der Dose, wie Höhe und Durchmesser, vorgegeben ist. Die Biegung, d.h. der Verlauf der glatten Kurve im dreidimensionalen Raum, und die Länge der Führungsstangen ergeben sich aus dem gewünschten Verschwenkwinkel und einer gegebenenfalls zu überbrückenden Distanz z.B. zu einer nachfolgenden Fördereinrichtung.

Die Seitenfläche einer Führungsstange, entlang derer Kontakt zu dem Oberflächenbereich der Dose stattfindet, während die Dose transportiert wird, kann der Negativabformung dieses Oberflächenbereichs der Dose entsprechen. Durch diese formschlüssige Kontaktierung kann die Dose durch die Führungsstangen sicher entlang der Transportrichtung geführt werden, während die Dose verschwenkt wird. Die Dose verrutscht daher nicht ungewollt relativ zu den Führungsstangen, so dass ein stoßfreies und kontinuierliches Verschwenken möglich ist.

In einer zweiten Ausführungsform kann die Vorrichtung derart ausgebildet sein, dass sie im Zusammenwirken mit den Körpern diese zum Führen und Verschwenken im Wesentlichen mit ihrer gesamten Oberfläche kontaktiert. Die Vorrichtung kann in ihrem Inneren eine Bewegungsbahn mit einem Querschnitt umfassen, der an die Form des Körpers angepasst ist, da die Vorrichtung den Körper im Wesentlichen entlang des gesamten Längsschnittumfangs des Körpers kontaktiert. Die Bewegungsrichtung des Körpers kann im Wesentlichen senkrecht zum Querschnitt verlaufen. Die "gesamte Oberfläche", die zur Führung des Körpers verwendet wird, kann somit im Wesentlichen als die Fläche angesehen werden, durch die der Querschnitt der Bewegungsbahn im Dreidimensionalen begrenzt wird.

Die Bewegungsbahn erzwingt durch eine kontinuierliche Verlagerung, insbesondere eine Drehung, der Querschnittsfläche in der Bewegungsrichtung das Verschwenken und Führen des in der Bewegungsrichtung geförderten Körpers.

Die Vorrichtung kann derart ausgebildet sein, dass sie im Zusammenwirken mit den Körpern im Wesentlichen eine geschlossene Oberfläche gegenüber den Körpern bildet.

Die Vorrichtung kann Ausnehmungen mit einer vorgegebenen Größe an der Unterseite aufweisen. Die vorgegebene Größe der Ausnehmungen kann kleiner als ein Durchmesser eines kreiszylindrischen Körpers oder kleiner als eine minimale Dimension eines beliebig geformten Körpers sein, so dass die Körper beim Führen und Verschwenken jeweils nicht teilweise in die Ausnehmungen rutschen und es so zu Beschädigungen der Körper und/oder zu einem Festsetzen von Körpern in der Vorrichtung kommen kann. Dabei kann vorgesehen sein, die Ausnehmungen entlang der gesamten Vorrichtung vorzusehen und die Vorrichtung somit mit einer durchgehenden Öffnung nach unten auszustatten.

Mittels der Ausnehmungen kann flüssiges Medium von außen zu- oder nach außen abführbar sein. Die Ausnehmungen können aber auch dafür vorgesehen sein, Verklemmungen von Körpern in der Vorrichtung zu beheben; beispielsweise durch Einbringen eines Hilfsmittels in eine der Ausnehmungen.

Eine Bodenfläche der Vorrichtung kann durch mindestens ein Transportband gebildet werden, das dazu ausgelegt ist, die Körper zu- und/oder abzuführen. Die Transportbänder können aktiv den Transport der Körper durch die Vorrichtung unterstützen.

Die Vorrichtung kann Befestigungen zur Fixierung an anderen Fördereinrichtungen umfassen, wobei die Befestigungen mittels des generativen Fertigungsverfahrens an der Vorrichtung angebracht werden können. Die Befestigungen, wie Ösen, Haken, Stifte, können dafür vorgesehen sein, die Vorrichtung an einem körperzuführenden Transportband und/oder an einem körperabführenden Transportband bzw. dessen Rahmen zu fixieren.

Die Vorrichtung kann mindestens einen Verschleißstreifen umfassen, wobei vorzugsweise der mindestens eine Verschleißstreifen in einer Formnut formschlüssig fixiert ist und/oder der mindestens eine Verschleißstreifen UHMW-PE (Ultrahochmolekulargewichtiges Polyethylen) mit Glasanteilen umfasst und/oder die Vorrichtung an ihrer Außenseite abschnittsweise Ausnehmungen zum Einziehen des mindestens einen Verschleißstreifens aufweist und/oder die Vorrichtung mindestens eine Fixierung umfasst, die dazu ausgelegt ist, ein Herausrutschen des mindestens einen Verschleißstreifens in Transportrichtung zu verhindern. Durch den mindestens einen Verschleißstreifen können Abnutzungserscheinung der Vorrichtung vermindert werden und auch der Transport der Körper kann erleichtert werden. Weiterhin werden im Wesentlichen gleichbleibende und reproduzierbare Bedingungen für den Transport der Körper sichergestellt. Der mindestens eine Verschleißstreifen kann hierbei flächig, d.h. bandartig, oder auch schnur- bzw. seilartig ausgeführt sein. Das Material, das für das Band bzw. das Seil des mindestens einen Verschleißstreifens verwendet wird, ist vorzugsweise reibungsmindernd. Ein Vorteil von schnur- bzw. seilartig ausgeführten Verschleißstreifen im Vergleich zu bandartig ausgeführten Verschleißstreifen liegt in der einfacheren Einbringung der schnur- bzw. seilartig ausgeführten Verschleißstreifen, das sie beim Einziehen weniger leicht verkanten. Alternativ oder ergänzend zu einem Verschleißstreifen ist es auch denkbar, Bürstenführungen einzusetzen.

Die Vorrichtung kann eine Abblasung umfassen, die dazu ausgelegt ist, Restprodukt von der Außenseite der Körper abstreifen zu können, wobei vorzugsweise Leitungen für ein Abblasmedium separat ausgeführt sind und dem Verlauf der Vorrichtung folgen oder wobei Leitungen für ein Abblasmedium in die körperführenden Teile der Vorrichtung integriert sind. Durch die Abblasung des Restprodukts kann vermieden werden, dass zu große Mengen von Restprodukt in die Vorrichtung sowie nachfolgende Vorrichtungen eingebracht werden, die dann zu Problemen beim Führen und Verschwenken bzw. der weiteren Behandlung der Körper führen könnten. Analog kann auch prozessbedingtes Kondenswasser oder nach einer Pasteurisierung an der Körperaußenseite verbleibende Flüssigkeit abgeblasen werden.

Die Vorrichtung kann Kanäle für eine Zuführung eines reibungsvermindernden Mittels umfassen, wobei vorzugsweise die Leitungen für das reibungsvermindernde Mittel separat ausgeführt sind und dem Verlauf der Vorrichtung folgen oder wobei die Leitungen für das reibungsvermindernde Mittel in die körperführenden Teile der Vorrichtung integriert sind. Durch das reibungsvermindernde Mittel können Abnutzungserscheinung der Vorrichtungen vermindert und der Transport der Körper erleichtert werden.

Die Vorrichtung kann Kanäle für eine Zuführung eines Gases, wie z.B. Luft, umfassen, wobei die Vorrichtung vorzugsweise mit Öffnungen ausgestattet ist, um einen Gasstrom zu lenken. Die Öffnungen können als Lamellen, z.B. in Kiemenform, ausgebildet sein. Auch kann die Vorrichtung so hergestellt werden, dass die Kanäle und somit das austretende Gas schräg, d.h. unter einem Winkel, in Transportrichtung gerichtet sind und eine Umlenkung des Gases durch Lamellen entfallen kann. Durch die Ausbildung eines Luftkissens zwischen Körperoberfläche und Oberfläche der Vorrichtung wird der Transport der Körper unterstützt. Durch den wirkenden Gasstrom kann der Transport der Körper weiter unterstützt werden.

Die Vorrichtung kann eine Reinigungseinrichtung in Form mindestens einer Düse umfassen, die unterhalb einer Bewegungsbahn der Körper angeordnet und die dazu ausgelegt ist, die Körper zu reinigen, wobei vorzugsweise die mindestens eine Düse mit einem Reinigungsmedium beaufschlagbar ist und/oder die mindestens eine Düse in einem Bereich angeordnet ist, in dem durch Zusammenwirken der Vorrichtung mit den Körpern deren Körperöffnungen nach unten zeigen. Der Ausdruck Düse umfasst hierbei auch eine kleine Ausnehmung (Loch) oder mehrere kleine Ausnehmungen (Löcher) in einem medienführenden Rohr, die dazu ausgelegt ist/sind, das unter Druck stehende Reinigungsmittel austreten zu lassen.

In die Vorrichtung kann Elektronik, wie berührungslose Sensoren (z.B. Hall- oder Ultraschallsensoren), optische Erfassungseinrichtungen (z.B. Kameras oder Lichtschranken) oder RFID-Tags, integriert sein, wobei die Elektronik mittels des generischen Herstellungsverfahrens integriert ist (ähnlich dem bekannten Vergießen von Bauteilen) oder wobei die Elektronik modular austauschbar ausgeführt ist. Mittels der integrierten Elektronik ist es möglich, die Bewegung der Körper in der Vorrichtung zu verfolgen oder Inspektionsaufgaben durchzuführen. Die RFID-Tags erlauben eine eindeutige Identifizierung der Vorrichtung und können dem Hersteller wie auch dem Kunden Hinweise bezüglich Produktpiraterie geben. Durch die modulare Austauschbarkeit können im Falle einer Störung einzelne Elemente der Elektronik leicht entnommen und ausgetauscht werden, durch die Integration mittels des generischen Herstellungsverfahrens kann die Elektronik vor störenden Einflüssen, wie z.B. Reinigungsmedien, geschützt werden.

Es kann vorgesehen sein, dass die Vorrichtung Ausnehmungen umfasst, die dazu ausgelegt sind, herkömmliche elektronische Bauteile aufzunehmen. Solch eine Ausnehmung kann beispielsweise ein Loch für eine Kamera sein. Durch die Verwendung spezieller Materialien kann im Rahmen des generativen Fertigungsprozesses auch gleich eine Abdichtung einer solchen Ausnehmung erfolgen.

Die Vorrichtung kann Toleranz-ausgleichende Mittel, wie federnde Abschnitte, umfassen, wobei vorzugsweise die Toleranz-ausgleichenden Mittel pneumatisch, mechanisch oder hydraulisch ausgeführt sind und/oder die Toleranz-ausgleichenden Mittel aus einem anderen Material als die Vorrichtung bestehen. Die Toleranz-ausgleichenden Mittel ermöglichen das Führen und Verschwenken von Körpern, die durch ihren Herstellungsprozess und/oder durch Abnutzungserscheinungen, leicht unterschiedliche Dimensionen aufweisen. Die Verwendung Toleranzausgleichender Mittel kann vorteilhaft sein, wenn zwei Anwender ähnlich dimensionierte Körper in ihren Prozesslinien verwenden. Dann können zwei gleiche Vorrichtungen mittels des generativen Fertigungsverfahrens gefertigt und jeweils verschieden dimensionierte Toleranz-ausgleichenden Mittel in die Vorrichtungen eingebracht werden, so dass der erste Anwender in seiner Vorrichtung beispielsweise Dosen mit einer Höhe von 110 mm und einem Außendurchmesser von 53 mm und der zweite Anwender in seiner Vorrichtung beispielsweise Dosen mit einer Höhe von 110 mm und einem Außendurchmesser von 58 mm verwenden kann. Als verschieden dimensionierte Toleranz-ausgleichende Mittel können beispielsweise verschieden breite und/oder verschieden dicke Verschleißstreifen verwendet werden.

Die Vorrichtung kann mit Reinigungsmittel, wie desinfizierendes Reinigungsmittel oder Wasser unter Hochdruck, beaufschlagbar sein, wobei vorzugsweise eine Zuführung des Reinigungsmittels über eine Vielzahl von Kanälen und Öffnungen erfolgt, um eine vorgegebene Benetzung der Vorrichtung sicherzustellen. So ist es möglich, die Vorrichtung entsprechend bestehender Hygienevorschriften zu reinigen bzw. zu desinfizieren, ohne dass die Vorrichtung zerlegt werden müsste.

Die Vorrichtung kann auf einem Grundkörper angeordnet sein, wobei der Grundkörpervorzugsweise aus recyceltem Kunststoff ("Regenerat") oder einem anderen kostengünstigen und geeigneten Material besteht und/oder das Gewichtsverhältnis von der Vorrichtung zu dem Grundkörper größer als 50%, größer als 25% oder größer als 10% ist. Die Verwendung eines Grundkörpers sorgt für die Stabilität der Vorrichtung, kann das Positionieren der Vorrichtung innerhalb einer Prozesslinie erleichtern (z.B. Standardisierung von Befestigungen) und ermöglicht eine noch schnellere und kostengünstigere Fertigung der Vorrichtung.

Die Vorrichtung kann aus mehreren Modulen zusammengesetzt sein, wobei vorzugsweise ein Zusammensetzen mittels Verschrauben, Verkleben, Verschweißen oder durch ein generatives Verfahren erfolgt. Durch die Randbedingungen der generativen Fertigung kann eine maximale Größe für die gefertigte Vorrichtung vorgegeben sein. Wird die Vorrichtung aus mehreren Modulen zusammengesetzt, kann die Größe der gesamten Vorrichtung vergrößert werden. Ein Zusammensetzen der Module mittels eines generativen Verfahrens ermöglicht einen Übergang ohne Stoßstellen. Sonst entsteht maximal eine Stoßstelle, beispielsweise, wenn zwei Vorrichtungen der geschlossenen Variante zusammengefügt werden.

Des Weiteren umfasst die Erfindung eine Anlage mit mindestens zwei Vorrichtungen zum Führen und Verschwenken von Körpern, wie oben oder weiter unten beschrieben, wobei die mindestens zwei Vorrichtungen parallel angeordnet sind, mit einer Transportvorrichtung und mit einer Steuerungsvorrichtung, die dazu ausgelegt ist, die Transportvorrichtung entsprechend eines Steuerungsbefehls zu steuern und dadurch Körper selektiv einer der mindestens zwei Vorrichtungen zuzuführen. Diese Anlage ermöglicht je nach Körper, z.B. zwei Körpertypen mit unterschiedlichen Durchmessern, die Zuführung eines Körpers zu einer entsprechenden Vorrichtung zum Führen und Verschwenken des Körpers, so dass der Körpertyp zu den Dimensionen der Vorrichtung passt. Die parallele Anordnung der mindestens zwei Vorrichtungen bedeutet, dass diese Vorrichtungen in einem Prozessweg nicht aufeinander folgend angeordnet sind.

Um die Körper selektiv einer der mindestens zwei Vorrichtungen zuführen zu können, kann die Transportvorrichtung unterschiedlich ausgebildet sein.

In einer ersten Ausführungsform der Anlage kann die Transportvorrichtung eine Weiche zum Umlenken eines Transportpfads eines Körpers umfassen. Der Körper wird mittels der Weiche umgelenkt und der einen ihm zugeordneten Vorrichtungen zugeführt.

In einer anderen Ausführungsform der Anlage kann die Transportvorrichtung dazu ausgelegt sein, die mindestens zwei Vorrichtungen horizontal zu verfahren. Somit bleibt der Transportpfad des Körpers unverändert und die Vorrichtung wird in diesen Transportpfad verbracht.

In einer weiteren Ausführungsform der Anlage können die mindestens zwei Vorrichtungen ähnlich einer Revolvertrommel vertikal um eine gemeinsame Achse gedreht werden, so dass die jeweils benötigte Vorrichtung in den Transportpfad der Körper eingebracht werden kann.

Zudem betrifft die Erfindung eine Behandlungslinie für PET-Behälter mit einem Prozessweg, einem Preformlager, einem Preformofen einer Streckblasmaschine sowie einer Vorrichtung, wie oben oder weiter unten beschrieben, die in dem Prozessweg zwischen dem Preformlager und dem Preformofen angeordnet ist.

Des Weiteren betrifft die Erfindung eine Behandlungslinie für PET-Behälter mit einem Prozessweg, einem Lager für Behälterverschlüsse, einer Verschließvorrichtung zum Verschließen von PET-Behältern mit den Behälterverschlüssen und einer Vorrichtung, wie oben oder weiter unten beschrieben, die in dem Prozessweg zwischen dem Lager für die Behälterverschlüsse und der Verschließvorrichtung angeordnet ist.

In anderen Behandlungslinien kann eine Vorrichtung, wie oben oder weiter unten beschrieben:
- vor einem Füller zum Füllen der Körper mit Produkt,
- nach einem Füller zum Füllen der Körper mit Produkt,
- nach einem Verschließer zum Verschließen der Körper,
- nach einer Abschwallvorrichtung zum Entfernen von Produktresten,
- vor oder nach einer Datierungsstation zum Aufbringen produktspezifischer Informationen auf die Körper angeordnet sein

### Kurze Figurenbeschreibung

Die beigefügten Figuren stellen beispielhaft zum besseren Verständnis und zur Veranschaulichung Aspekte der Erfindung dar. Dabei zeigt:
- Figur 1: eine erste Ausführungsform einer Vorrichtung zum Führen und Verschwenken kreiszylindrischer Körper mit Führungsstangen;
- Figur 2: eine zweite Ausführungsform der Vorrichtung, wobei die Führungsstangen Kanäle und Aufnehmungen aufweisen;
- Figur 3: eine dritte Ausführungsform der Vorrichtung (geschlossene Variante);
- Figur 4A: eine Frontansicht einer vierten Ausführungsform der Vorrichtung (geschlossene Variante);
- Figur 4B: eine perspektivische Ansicht der Vorrichtung von Figur 4A;
- Figur 5: eine perspektivische Ansicht einer fünften Ausführungsform der Vorrichtung (geschlossene Variante) mit Aufnahmen für Verschleißstreifen und mit einem medienführender Kanal im unteren Bereich der Vorrichtung;
- Figur 6A: eine perspektivische Ansicht einer sechsten Ausführungsform der Vorrichtung (geschlossene Variante) mit eingearbeiteten Kanälen und Austrittsöffnungen;
- Figur 6B: Austrittsöffnungen der Vorrichtung aus Figur 6A mit einer Kiemenform;
- Figur 7: eine siebte Ausführungsform der Vorrichtung mit Führungsstangen, die für kreiszylindrische Körper ausgelegt ist, die drei stufenförmig voneinander verschiedene Querschnitte aufweisen;
- Figur 8: eine achte Ausführungsform der Vorrichtung (geschlossene Variante), die für kreiszylindrische Körper ausgelegt ist, die drei stufenförmig voneinander verschiedene Querschnitte aufweisen
- Figur 9: eine neunte Ausführungsform der Vorrichtung (offene Variante), wobei die Führungsstangen Verschleißstreifen umfassen.

### Ausführliche Figurenbeschreibung

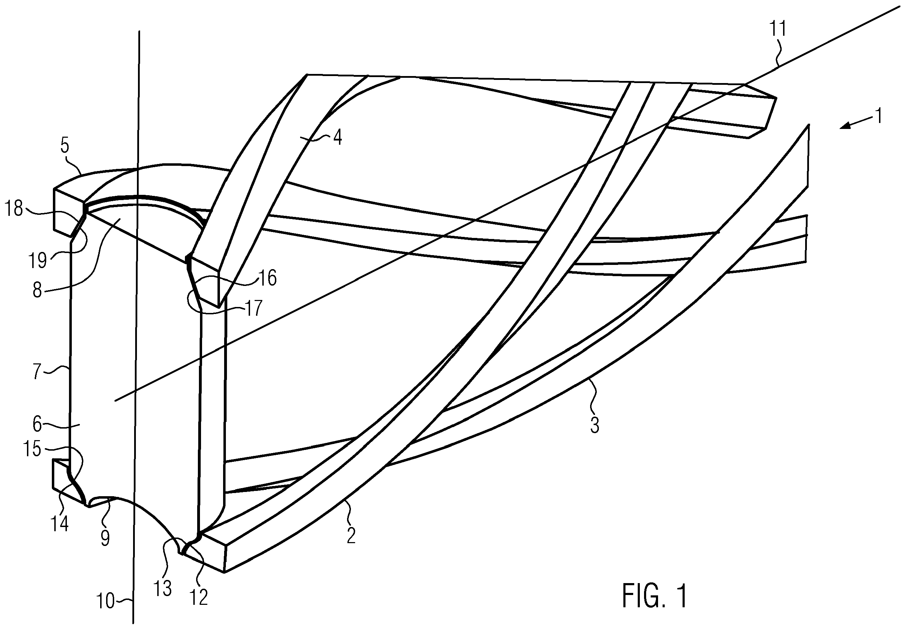

Figur 1 zeigt eine erste Ausführungsform einer Vorrichtung 1 zum Führen und Verschwenken kreiszylindrischer Körper 6. Exemplarisch ist hier eine Dose 6 als kreiszylindrische Körper 6 dargestellt. Die wesentlichen Teile der Vorrichtung 1 sind die vier gezeigten Führungsstangen 2, 3, 4, 5, die so ausgebildet sind, dass sie ein kontinuierliches Verschwenken der Dose 6 um ihre Längsachse 10 unterstützen, während sich die Dose 6 in der Vorrichtung 1 in die Transportrichtung 11 bewegt. Die Vorrichtung 1 kontaktiert die Dose 6 an deren Oberfläche formschlüssig in vier Oberflächenbereichen 13, 15, 17, 19 mit jeweils einem Führstangenbereich 12, 14, 16, 18 einer der vier Führungsstangen 2 - 5. In der Darstellung erfolgt die Kontaktierung an dem geneigten Übergang von Mantelfläche 7 zu Deckelfläche 8 bzw. Bodenfläche 9 (auch so bezeichnet, wenn Deckel- 8 bzw. Bodenfläche 9 noch keinen Deckel bzw. Boden aufweisen).

Um das Verschwenken der Dose 6 vornehmen zu können, bildet jede der Führungsstangen 2 - 5 eine glatte Kurve in dreidimensionalen Raum, wobei die einzelnen Führungsstangen 2 - 5 zueinander einen konstanten Querabstand aufweisen. Dieser Querabstand ist durch die Dimension der Dose 6, wie z.B. Höhe und Durchmesser, vorgegeben. Die Biegung und die Länge der Führungsstangen 2 - 5 ergeben sich aus dem gewünschten Verschwenkwinkel.

Die Seitenfläche einer Führungsstange 2 - 5, entlang derer Kontakt zu dem Oberflächenbereich der Dose 6 stattfindet, während die Dose 6 transportiert wird, entspricht der Negativabformung dieses Oberflächenbereichs der Dose 6. Durch diese formschlüssige Kontaktierung kann die Dose 6 durch die Führungsstangen 2 - 5 sicher entlang der Transportrichtung 11 geführt werden, während die Dose 6 verschwenkt wird. Die Dose 6 verrutscht daher nicht ungewollt relativ zu den Führungsstangen 2 - 5, so dass ein stoßfreies und kontinuierliches Verschwenken möglich ist.

Die Führungsstangen 2 - 5 können an nicht dargestellten Rahmenelementen oder an einem nicht dargestellten Grundkörper angebracht sein. Daneben können weitere Führungsstangen vorgesehen sein (nicht gezeigt), die die Dose and der Mantel-, Boden- und/oder Deckelfläche kontaktieren.

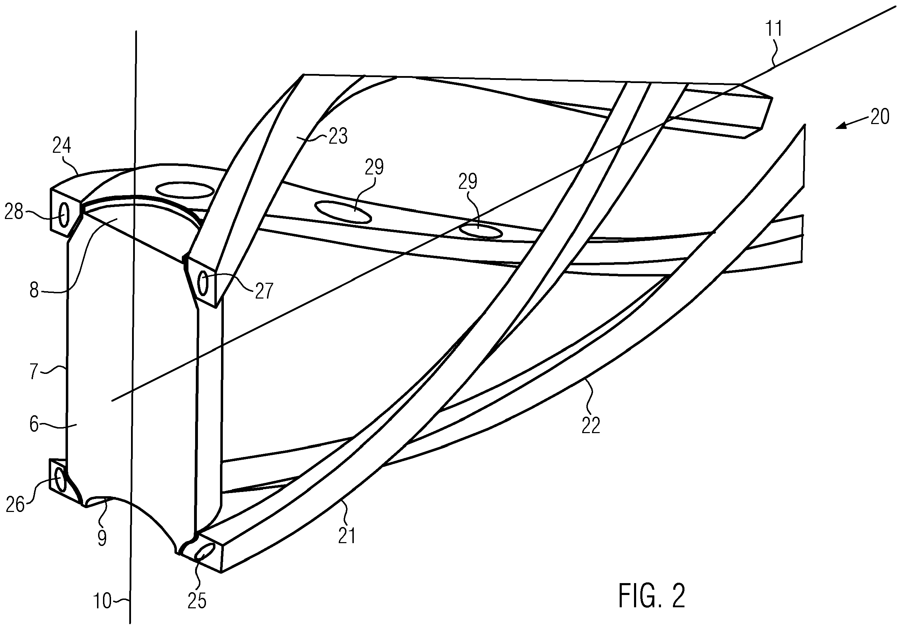

Figur 2 zeigt eine zweite Ausführungsform der Vorrichtung 20, die im Wesentlichen der aus der Figur 1 entspricht, aber wobei die Führungsstangen 21, 22, 23, 24 in ihrem Inneren Kanäle 25, 26, 27, 28 aufweisen und wobei die Seitenflächen der Führungsstangen 21 - 24, entlang derer Kontakt zu dem Oberflächenbereich der Dose 6 stattfindet, während die Dose 6 transportiert wird, Ausnehmungen 29 aufweisen. Die Kanäle 25 - 28 können zum Transport verschiedener Medien verwendet werden, wobei diese Medien durch die Ausnehmungen 29 austreten können.

Als Medium kann beispielsweise Luft vorgesehen sein, wodurch zwischen dem kontaktierten Oberflächenbereich der Dose 6 und den Seitenflächen der Führungsstangen 21 - 24 eine Art Luftpolster ausgebildet wird, durch das das Führen und das Verschwenken der Dose 6 unterstützt und erleichtert wird.

Des Weiteren kann als Medium beispielsweise ein Reinigungs-/Desinfektionsmittel verwendet werden, wodurch in der Vorrichtung 20 geführte Dosen 6 und/oder die Vorrichtung 20 selbst gereinigt/desinfiziert werden können.

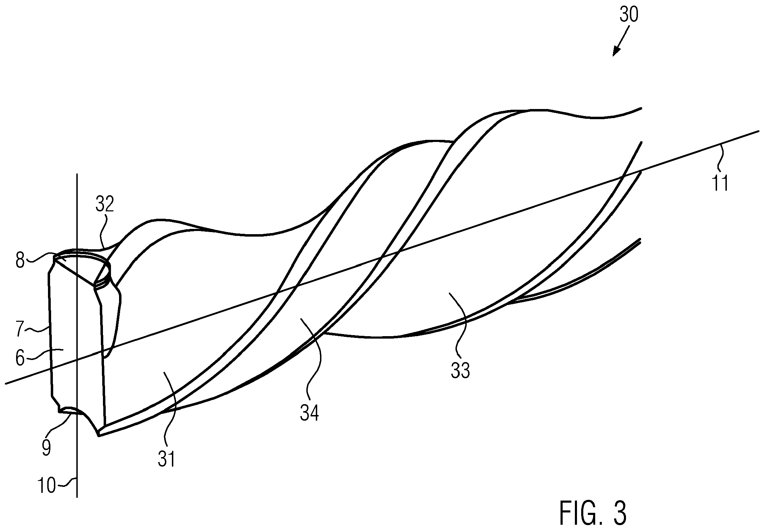

Figur 3 zeigt eine dritte Ausführungsform der Vorrichtung 30 (geschlossene Variante), wobei die Vorrichtung die Dose 6 entlang des gesamten Längsschnittumfangs der Dose 6 kontaktiert. Der Längsschnitt verläuft durch die und parallel zu der Längsachse 10 und senkrecht zu der Transportrichtung 11.

Die Vorrichtung 30 umfasst in ihrem Inneren eine Bewegungsbahn mit einem Querschnitt, wobei die Bewegungsrichtung der Dose 6 im Wesentlichen senkrecht zum Querschnitt verläuft. Der Querschnitt ist an die Form der Dose 6 angepasst, da die Vorrichtung die Dose 6 entlang des gesamten Längsschnittumfangs der Dose 6 kontaktiert. In der Figur 3 zeigen die vier Seitenflächen 31, 32, 33, 34 der Vorrichtung 30 im Wesentlichen den Verlauf der Querschnittsform im Innern der Vorrichtung 30. Die Seitenflächen 31 und 33 kontaktieren die Mantelfläche 7 der Dose, die Seitenfläche 32 kontaktiert die Deckelfläche 8 und die Seitenfläche 34 kontaktiert die Bodenfläche 9.

Die Bewegungsbahn erzwingt durch eine kontinuierliche Verlagerung, insbesondere eine Drehung, der Querschnittsfläche in der Bewegungsrichtung das Verschwenken und Führen der in der Bewegungsrichtung geförderten Dose 6.

Durch die kontinuierliche Verlagerung ist die Beschädigungsgefahr der Dose 6, beispielsweise durch Stöße an inneren Strukturen der Vorrichtung 30, klein.

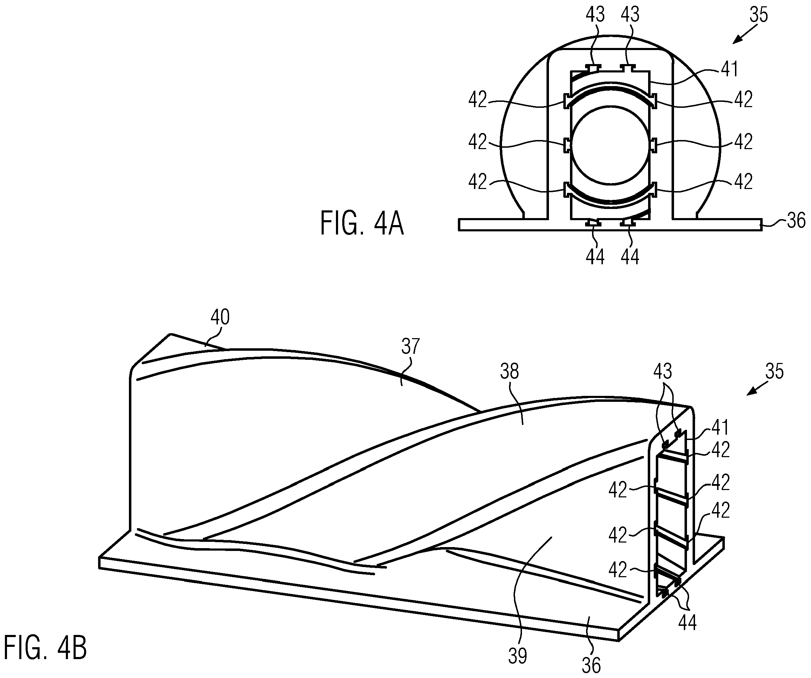

Figur 4A zeigt eine Frontansicht einer vierten Ausführungsform der Vorrichtung 35 (geschlossene Variante), wobei diese Vorrichtung 35 auf einer Grundplatte 36 angeordnet ist und im Inneren 41 zudem Aufnahmen 42, 43, 44 für Verschleißstreifen umfasst.

Figur 4B zeigt eine perspektivische Ansicht der vierten Ausführungsform. Zu erkennen sind die genaue Kontur zum Führen und Verschwenken der kreiszylindrischen Körper, wobei die Vorrichtung auf einer ebenen Grundplatte bzw. auf einem ebenen Grundkörper angeordnet ist.

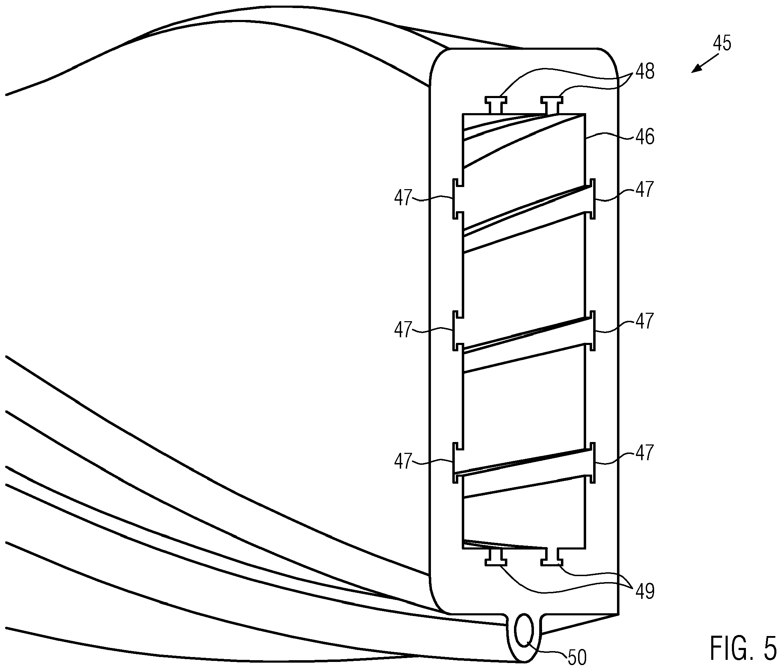

Figur 5 zeigt eine perspektivische Ansicht einer fünften Ausführungsform der Vorrichtung 45 (geschlossene Variante), wobei im Inneren 46 der Vorrichtung 45 Aufnahmen 47, 48, 49 für Verschleißstreifen sichtbar sind und zudem ein medienführender Kanal 50 im unteren Bereich der Vorrichtung 45 angeordnet ist, so dass in der Vorrichtung 45 geführte und verschwenkte Körper bzw. die Vorrichtung 45 an sich durch das Medium gereinigt werden können.

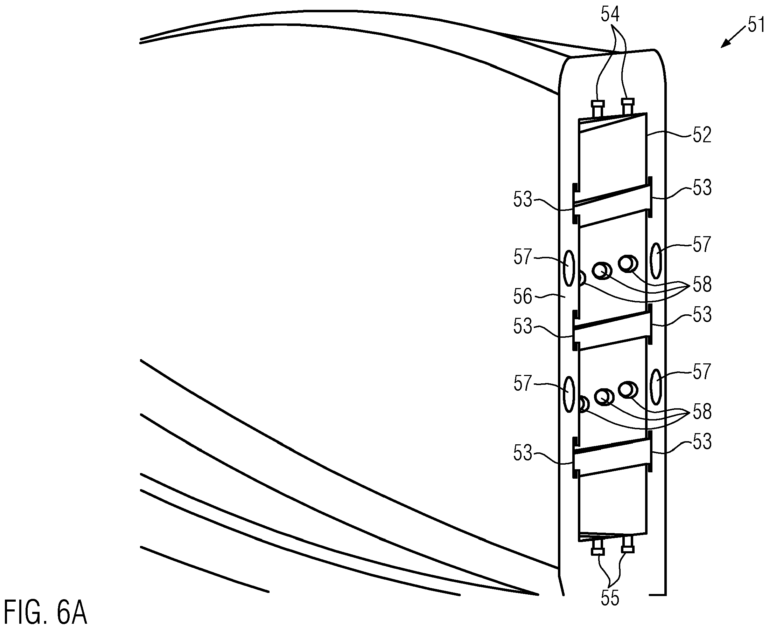

Figur 6A zeigt eine perspektivische Ansicht einer sechsten Ausführungsform der Vorrichtung 51 (geschlossene Variante), wobei die Vorrichtung 51 im Inneren 52 Aufnahmen 53, 54, 55 für Verschleißstreifen umfasst und in ihrer Wandung 56 eingearbeitete Kanäle 57 und eine Vielzahl von Austrittsöffnungen 58, für z.B. Luft, umfasst. In der gezeigten Ausführungsform sind die Austrittsöffnungen 58 an den Innenseiten der beiden Seitenwände angeordnet. Es kann auch vorgesehen sein, dass Austrittsöffnungen 58 derart angeordnet sind, dass sie während eines gesamten Verschwenkvorgangs immer den gleichen Punkt eines Behälters in der Vorrichtung 51 mit Medium beaufschlagen. So können beispielsweise zum Ausblasen eines Innenraums eines Behälters (z.B. Preform) mit Luft, um Fremdkörper zu entfernen, die Austrittsöffnungen 58 in einer Bodenfläche der Vorrichtung 51 angeordnet sein und durch die Form der Vorrichtung 51 zum Führen und Verschwenken des Behälters folgen die Austrittsöffnungen 58 dieser Form, so dass sich die Austrittsöffnungen 58 immer gegenüber der Mündung des Behälters befinden.

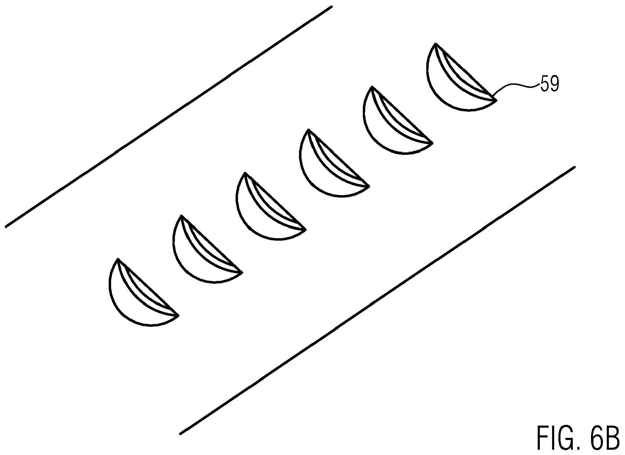

Die Austrittsöffnungen können wie in Figur 6B gezeigt eine Kiemenform 59 aufweisen; somit kann ein Luftstrom in Transportrichtung gesteuert werden und so das Bewegen und Verschwenken der Körper unterstützt werden.

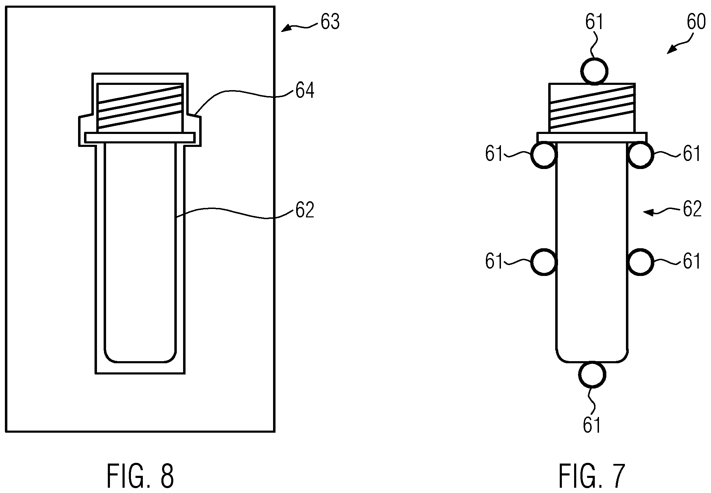

Figur 7 zeigt eine siebte Ausführungsform der Vorrichtung 60 mit Führungsstangen 61, wobei die Vorrichtung 60 die für kreiszylindrische Körper 62 ausgelegt ist, die drei stufenförmig voneinander verschiedene Querschnitte aufweisen, z.B. für Preforms.

Figur 8 zeigt eine achte Ausführungsform der Vorrichtung 63 (geschlossene Variante), die für kreiszylindrische Körper 62 (z.B. Preforms) ausgelegt ist, die drei stufenförmig voneinander verschiedene Querschnitte aufweisen. Die Vorrichtung 63 umfasst in ihrem Inneren 64 eine Bewegungsbahn mit einem Querschnitt, wobei die Bewegungsrichtung des Körpers 62 im Wesentlichen senkrecht zum Querschnitt verläuft. Der Querschnitt ist an die Form des Körpers 62 angepasst, da die Vorrichtung 63 den Körper 62 im Wesentlichen entlang des gesamten Längsschnittumfangs des Körpers 62 kontaktiert.

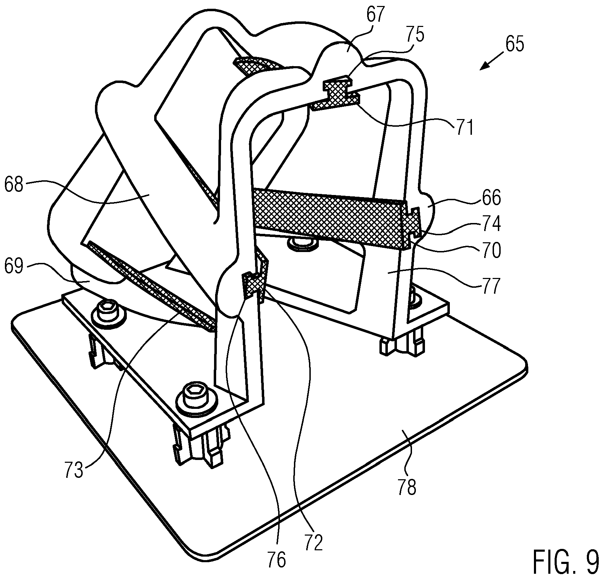

Figur 9zeigt eine neunte Ausführungsform der Vorrichtung 65 (offene Variante), wobei die Führungsstangen 66, 67, 68, 69 flächig ausgeführte Verschleißstreifen 70, 71, 72, 73 umfassen. Die Verschleißstreifen 70 - 72 sind teilweise in dafür vorgesehen Aufnahmen 74, 75, 76 in den Führungsstangen 66 - 68 angeordnet. Die Aufnahme ein der Führungsstangen 69 ist in Figur 9 nicht sichtbar. Die Führungsstangen 66 - 69 sind an einer Stützstruktur 77 angebracht, die wiederum mit einer Grundplatte 78 verbunden ist.

## Patentansprüche

1. Vorrichtung (1, 20, 30, 35, 45, 51, 60, 63, 65) zum Führen und Verschwenken von Körpern (6), wie Dosen, Flaschen, Preforms, Flaschenverschlüssen, Behältern aus Karton oder Kolben, wobei das Führen und Verschwenken der Körper (6) durch Gleiten der Körper (6) an der Vorrichtung (1, 20, 30, 35, 45, 51, 60, 63, 65) erfolgt, wobei die Vorrichtung (1, 20, 30, 35, 45, 51, 60, 63, 65) mithilfe eines generativen Fertigungsverfahrens hergestellt wurde,
**dadurch gekennzeichnet, dass**
die Vorrichtung Befestigungen zur Fixierung an anderen Fördereinrichtungen umfasst, wobei die Befestigungen mittels des generativen Fertigungsverfahrens an der Vorrichtung angebracht werden, wobei die Befestigungen Ösen, Haken oder Stifte sind.

2. Die Vorrichtung (1, 20, 30, 35, 45, 51, 60, 63, 65) nach Anspruch 1 umfassend mindestens einen Kunststoff oder mindestens ein Metall oder eine Mischung aus mindestens einem Kunststoff und mindestens einem Metall.

3. Die Vorrichtung (1, 20, 30, 35, 45, 51, 60, 63, 65) nach Anspruch 1 oder 2, wobei die Vorrichtung (1, 20, 30, 35, 45, 51, 60, 63, 65) derart ausgebildet ist, dass sie in Zusammenwirken mit den Körpern (6) diese formschlüssig in mindestens drei Oberflächenbereichen (13, 15, 17, 19) zum Führen und Verschwenken kontaktiert.

4. Die Vorrichtung (30, 35, 45, 51, 60, 63) nach Anspruch 1 oder 2, wobei die Vorrichtung (30, 35, 45, 51, 60, 63) derart ausgebildet ist, dass sie in Zusammenwirken mit den Körpern (6) diese im Wesentlichen mit ihrer gesamten Oberfläche zum Führen und Verschwenken kontaktiert, wobei die Vorrichtung (30, 35, 45, 51, 60, 63) beispielsweise derart ausgebildet ist, dass sie im Zusammenwirken mit den Körpern (6) im Wesentlichen eine geschlossene Oberfläche gegenüber den Körpern (6) zum Führen und Verschwenken bildet.

5. Die Vorrichtung (30, 35, 45, 51, 60, 63) nach Anspruch 4, wobei die Vorrichtung (30, 35, 45, 51, 60, 63) Ausnehmungen mit einer vorgegebenen Größe an der Unterseite aufweist, wobei beispielsweise mittels der Ausnehmungen flüssiges Medium von außen zu- oder nach außen abführbar ist.

6. Die Vorrichtung nach Anspruch 4, wobei eine Bodenfläche der Vorrichtung durch mindestens ein Transportband gebildet wird, das dazu ausgelegt ist, die Körper (6) zu- und/oder abzuführen.

7. Die Vorrichtung nach Anspruch 1, wobei die Befestigungen dafür vorgesehen sind, die Vorrichtung an einem körperzuführenden Transportband und/oder an einem körperabführenden Transportband bzw. dessen Rahmen zu fixieren.

8. Die Vorrichtung nach einem der Ansprüche 1 bis 7, wobei die Vorrichtung Toleranz-ausgleichende Mittel, wie federnde Abschnitte umfasst, wobei vorzugsweise die Toleranz-ausgleichenden Mittel pneumatisch, mechanisch oder hydraulisch ausgeführt sind und/oder die Toleranz-ausgleichenden Mittel aus einem anderen Material als die Vorrichtung bestehen.

9. Die Vorrichtung (35, 45, 51, 65) nach einem der Ansprüche 1 bis 8, wobei die Vorrichtung mindestens einen Verschleißstreifen umfasst, wobei vorzugsweise der mindestens eine Verschleißstreifen (70, 71, 72, 73) in einer Formnut (42, 43, 44, 47, 48, 49, 53, 54, 55, 74, 75, 76) formschlüssig fixiert ist und/oder der mindestens eine Verschleißstreifen (70, 71, 72, 73) UHMW-PE mit Glasanteilen umfasst und/oder die Vorrichtung an ihrer Außenseite abschnittsweise Ausnehmungen zum Einziehen des mindestens einen Verschleißstreifens (70, 71, 72, 73) aufweist und/oder die Vorrichtung mindestens eine Fixierung umfasst, die dazu ausgelegt ist, ein Herausrutschen des mindestens einen Verschleißstreifens (70, 71, 72, 73) in Transportrichtung zu verhindern,
und/oder
wobei die Vorrichtung (45, 51) eine Abblasung umfasst, die dazu ausgelegt ist, Restprodukt von der Außenseite der Körper (6) abstreifen zu können, wobei vorzugsweise Leitungen (50) für ein Abblasmedium separat ausgeführt sind und dem Verlauf der Vorrichtung (45) folgen oder wobei Leitungen (57) für ein Abblasmedium in die körperführenden Teile der Vorrichtung (51) integriert sind, und/oder
wobei die Vorrichtung Kanäle für eine Zuführung eines reibungsvermindernden Mittels umfasst, wobei vorzugsweise Leitungen für das reibungsvermindernde Mittel separat ausgeführt sind und dem Verlauf der Vorrichtung folgen oder wobei Leitungen für das reibungsvermindernde Mittel in Teile der Vorrichtung integriert sind, und/oder
wobei die Vorrichtung Kanäle für eine Zuführung eines Gases umfasst, wobei die Vorrichtung vorzugsweise mit Öffnungen (29, 58, 59) ausgestattet ist, um einen Gasstrom zu lenken, und/oder
wobei die Vorrichtung eine Reinigungseinrichtung in Form mindestens einer Düse umfasst, die unterhalb einer Bewegungsbahn der Körper (6) angeordnet und dazu ausgelegt ist, die Körper (6) zu reinigen, wobei vorzugsweise die mindestens eine Düse mit einem Reinigungsmedium beaufschlagbar ist und/oder die mindestens eine Düse in einem Bereich angeordnet ist, in dem durch Zusammenwirken der Vorrichtung mit den Körpern (6) deren Körperöffnungen nach unten zeigen, und/oder
wobei in die Vorrichtung Elektronik, wie berührungslose Sensoren, optische Erfassungseinrichtungen, RFID-Tags, integriert ist, wobei die Elektronik mittels des generativen Herstellungsverfahren integriert ist oder wobei die Elektronik modular austauschbar ausgeführt ist, und/oder
wobei die Vorrichtung mit Reinigungsmittel, wie desinfizierendes Reinigungsmittel, Wasser unter Hochdruck, beaufschlagbar ist, wobei vorzugsweise eine Zuführung des Reinigungsmittels über eine Vielzahl von Kanälen und Öffnungen erfolgt, um eine vorgegebene Benetzung der Vorrichtung sicherzustellen, und/oder
wobei die Vorrichtung (35) auf einem Grundkörper (36) angeordnet ist, wobei vorzugsweise der Grundkörper (36) vorzugsweise aus recyceltem Kunststoff besteht und/oder das Gewichtsverhältnis von der Vorrichtung (35) zu dem Grundkörper (36) größer als 50%, größer als 25% oder größer als 10% ist.

10. Die Vorrichtung nach einem der Ansprüche 1 bis 9, wobei die Vorrichtung aus mehreren Modulen zusammengesetzt ist, wobei vorzugsweise ein Zusammensetzen mittels Verschrauben, Verkleben, Verschweißen oder durch ein generatives Verfahren erfolgt.

11. Anlage mit:
- mindestens zwei Vorrichtungen nach einem der Ansprüche 1 bis 10, wobei die mindestens zwei Vorrichtungen parallel angeordnet sind,
- mit einer Transportvorrichtung,
- mit einer Steuerungsvorrichtung, die dazu ausgelegt ist, die Transportvorrichtung entsprechend eines Steuerungsbefehls zu steuern und dadurch Körper selektiv einer der mindestens zwei Vorrichtungen zuzuführen.

12. Die Anlage nach Anspruch 11, wobei die Transportvorrichtung eine Weiche zum Umlenken eines Transportpfads eines Körpers umfasst.

13. Die Anlage nach Anspruch 11, wobei die Transportvorrichtung dazu ausgelegt ist, die mindestens zwei Vorrichtungen horizontal zu verfahren.

14. Behandlungslinie für PET-Behälter mit:
- einem Prozessweg,
- einem Preformlager,
- einem Preformofen einer Streckblasmaschine
**gekennzeichnet durch**
eine Vorrichtung nach einem der Ansprüche 1 bis 10, die in dem Prozessweg zwischen dem Preformlager und dem Preformofen angeordnet ist.

15. Behandlungslinie für PET-Behälter mit:
- einem Prozessweg,
- einem Lager für Behälterverschlüsse,
- einer Verschließvorrichtung zum Verschließen von PET-Behältern mit den Behälterverschlüssen **gekennzeichnet durch**
eine Vorrichtung nach einem der Ansprüche 1 bis 10, die in dem Prozessweg zwischen dem Lager für die Behälterverschlüsse und der Verschließvorrichtung angeordnet ist.

## Claims

1. Device (1, 20, 30, 35, 45, 51, 60, 63, 65) for guiding and pivoting bodies (6), such as cans, bottles, preforms, bottle closures, cardboard containers or flasks, wherein the guiding and pivoting of the bodies (6) takes place by sliding the bodies (6) on the device (1, 20, 30, 35, 45, 51, 60, 63, 65), wherein the device (1, 20, 30, 35, 45, 51, 60, 63, 65) was produced using a generative manufacturing method,
**characterised in that**
the device comprises fastenings for fixing to other conveyor units, the fastenings being attached to the device by means of the generative manufacturing method, wherein the fastenings are eyelets, hooks, or pins.

2. The device (1, 20, 30, 35, 45, 51, 60, 63, 65) according to claim 1, comprising at least one plastic or at least one metal or a mixture of at least one plastic and at least one metal.

3. The device (1, 20, 30, 35, 45, 51, 60, 63, 65) according to claim 1 or 2, wherein the device (1, 20, 30, 35, 45, 51, 60, 63, 65) is configured such that, cooperating with the bodies (6), it contacts these bodies (6) in a form fit manner in at least three surface areas (13, 15, 17, 19) for guiding and pivoting.

4. The device (30, 35, 45, 51, 60, 63) according to claim 1 or 2, wherein the device (30, 35, 45, 51, 60, 63) is configured such that, cooperating with the bodies (6), it contacts these bodies (6) substantially with its entire surface for the purpose of guiding and pivoting, wherein, for example, the device (30, 35, 45, 51, 60, 63) is configured such that, cooperating with the bodies (6), it substantially defines a closed surface relative to these bodies (6) for the purpose of guiding and pivoting.

5. The device (30, 35, 45, 51, 60, 63) according to claim 4, wherein the device (30, 35, 45, 51, 60, 63) has openings of a predetermined size on the underside, wherein, for example, by means of the openings, liquid medium can be fed from the outside or discharged to the outside.

6. The device according to claim 4, wherein a bottom surface of the device is defined by at least one conveyor belt, which is configured to feed and/or discharge the bodies (6).

7. The device according to claim 1, wherein the fastenings are provided for fixing the device to a body-feeding conveyor belt and/or a body-discharging belt or its frame.

8. The device according to one of the claims 1 to 7, wherein the device comprises tolerance compensating means, such as resilient portions, the tolerance compensating means being preferably of a pneumatic, mechanical or hydraulic nature and/or the tolerance compensating means being made of a material other than the material of the device.

9. The device (35, 45, 51, 65) according to one of the claims 1 to 8, wherein the device comprises at least one wear strip, wherein the at least one wear strip (70, 71, 72, 73) is preferably fixed in a shaped groove (42, 43, 44, 47, 48, 49, 53, 54, 55, 74, 75, 76) in a form fit manner and/or the at least one wear strip (70, 71, 72, 73) comprises UHMW-PE with glass components and/or the outer surface of the device is, sectionwise, provided with openings for inserting the at least one wear strip (70, 71, 72, 73) and/or the device comprises at least one fixing, which is configured to prevent the at least one wear strip (70, 71, 72, 73) from slipping out in the conveying direction,
and/or
wherein the device (45, 51) comprises a blow-off unit, which is configured to allow product residues to be removed from the outer surface of the bodies (6), wherein, preferably, ducts (50) for a blow-off medium are separately formed and follow the course of the device (45) or wherein ducts (57) for a blow-off medium are integrated in the body-carrying parts of the device (51), and/or
wherein the device comprises channels for feeding a friction-reducing medium, wherein, preferably, ducts for the friction-reducing medium are configured separately and follow the course of the device or wherein ducts for the friction-reducing medium are integrated in parts of the device, and/or
wherein the device comprises channels for supplying a gas, wherein the device is preferably equipped with openings (29, 58, 59) for directing a flow of gas, and/or
wherein the device comprises a cleaning unit in the form of at least one nozzle arranged below a path of movement of the bodies (6) and configured to clean the bodies (6), wherein, preferably, the at least one nozzle is adapted to have a cleaning medium applied thereto and/or the at least one nozzle is arranged in an area where, through a cooperation between the device and the bodies (6), the openings of these bodies (6) face downwards, and/or
wherein electronics, such as non-contact sensors, optical detection devices, RFID tags, are integrated in the device, wherein the electronics are integrated by means of the generative manufacturing method or wherein the electronics are configured as modular interchangeable elements, and/or
wherein the device is adapted to have applied thereto cleaning agents, such as a disinfecting cleaning agent, water under high pressure, the cleaning agent being preferably supplied through a plurality of channels and openings to ensure a predetermined wetting of the device, and/or
wherein the device (35) is arranged on a basic body (36), wherein, preferably, the basic body (36) consists of recycled plastic and/or the weight ratio of the device (35) to the basic body (36) is greater than 50%, greater than 25% or greater than 10%.

10. The device according to one of the claims 1 to 9, wherein the device is composed of a plurality of modules, the modules being joined together preferably by screwing, glueing, welding or by a generative method.

11. System comprising:
- at least two devices according to one of the claims 1 to 10, wherein the at least two devices are arranged in parallel,
- a conveyor device,
- a control device configured to control the conveyor device according to a control command and to thus feed bodies selectively to one of the at least two devices.

12. The system according to claim 11, wherein the conveyor device comprises a switch for redirecting a conveying path of a body.

13. The system according to claim 11, wherein the conveyor device is configured to move the at least two devices horizontally.

14. Treatment line for PET containers, comprising:
- a process path,
- a preform storage unit,
- a preform oven of a stretch blow-molding machine
**characterized by**
a device according to one of the claims 1 to 10, arranged in the process path between the preform storage unit and the preform oven.

15. Treatment line for PET containers, comprising:
- a process path,
- a container closure storage unit,
- a closing unit for closing PET containers with the container closures,
**characterized by**
a device according to one of the claims 1 to 10, arranged in the process path between the container closure storage unit and the closing unit.

## Revendications

1. Dispositif (1, 20, 30, 35, 45, 51, 60, 63, 65) de guidage et de pivotement de corps (6), tels que des canettes, des bouteilles, des préformes, des bouchons de bouteilles, des contenants en carton ou des flacons, dans lequel le guidage et le pivotement des corps (6) s'effectue en faisant coulisser des corps (6) au niveau du dispositif (1, 20, 30, 35, 45, 51, 60, 63, 65), dans lequel le dispositif (1, 20, 30, 35, 45, 51, 60, 63, 65) a été fabriqué à l'aide d'un procédé de fabrication additive,
**caractérisé en ce que**
le dispositif comprend des fixations pour une fixation à d'autres dispositifs de transport, dans lequel les fixations sont montées au niveau du dispositif au moyen du procédé de fabrication additive, dans lequel les fixations sont des oeillets, des crochets ou des broches.

2. Dispositif (1, 20, 30, 35, 45, 51, 60, 63, 65) selon la revendication 1, comprenant au moins une matière plastique ou au moins un métal ou un mélange d'au moins une matière plastique et d'au moins un métal.

3. Dispositif (1, 20, 30, 35, 45, 51, 60, 63, 65) selon la revendication 1 ou 2, dans lequel le dispositif (1, 20, 30, 35, 45, 51, 60, 63, 65) est réalisé de tel sorte qu'il vient en contact de coopération par complémentarité de forme avec les corps (6) dans au moins trois zones de surface (13, 15, 17, 19) de guidage et de pivotement.

4. Dispositif (30, 35, 45, 51, 60, 63) selon la revendication 1 ou 2, dans lequel le dispositif (30, 35, 45, 51, 60, 63) est réalisé de telle sorte qu'il vient en contact de coopération avec les corps (6) sensiblement avec toute leur surface de guidage et de pivotement, dans lequel le dispositif (30, 35, 45, 51, 60, 63) est réalisé par exemple de telle sorte qu'en coopération avec les corps (6), il forme une surface sensiblement fermée par rapport aux corps (6) de guidage et de pivotement.

5. Dispositif (30, 35, 45, 51, 60, 63) selon la revendication 4, dans lequel le dispositif (30, 35, 45, 51, 60, 63) présente des évidements d'une taille prédéterminée sur la face inférieure, dans lequel par exemple, au moyen des évidements, du milieu liquide peut être évacué depuis l'extérieur vers l'extérieur ou à l'extérieur.

6. Dispositif selon la revendication 4, dans lequel une surface inférieure du dispositif est formée par au moins une bande transporteuse, qui est adaptée pour alimenter et/ou évacuer les corps (6).

7. Dispositif selon la revendication 1, dans lequel les fixations sont prévues pour fixer le dispositif à une bande transporteuse d'alimentation des corps et/ou à une bande transporteuse d'évacuation des corps ou à son châssis.

8. Dispositif selon l'une quelconque des revendications 1 à 7, dans lequel le dispositif comprend des moyens d'équilibrage de tolérance tels que des sections élastiques, de préférence dans lequel les moyens d'équilibrage de tolérance sont de conception pneumatique, mécanique ou hydraulique et/ou dans lequel les moyens d'équilibrage de tolérance sont constitués d'un matériau différent du dispositif.

9. Dispositif (35, 45, 51, 65) selon l'une quelconque des revendications 1 à 8, dans lequel le dispositif comprend au moins une bande d'usure, de préférence dans lequel la au moins une bande d'usure (70, 71, 72, 73) est fixée par complémentarité de forme dans une rainure de moulage (42, 43, 44, 47, 48, 49, 53, 54, 55, 74, 75, 76) et/ou la au moins une bande d'usure (70, 71, 72, 73) comprend du UHMW-PE avec des parties en verre et/ou le dispositif présente sur sa face extérieure des évidements partiels pour rétracter la au moins une bande d'usure (70, 71, 72, 73) et/ou le dispositif comprend au moins une fixation conçue pour empêcher un glissement de la au moins une bande d'usure (70, 71, 72, 73) dans la direction de transport,
et/ou
dans lequel le dispositif (45, 51) comprend un dispositif de soufflage qui est conçu pour pouvoir enlever l'agent résiduel de la face extérieure des corps (6), de préférence dans lequel des conduites (50) pour un milieu de soufflage sont réalisées séparément et suivent le parcours du dispositif (45) ou dans lequel des conduites (57) pour un milieu de soufflage sont intégrées dans les parties du dispositif (51) guidant les corps, et/ou dans lequel le dispositif comprend des canaux pour l'alimentation d'un milieu réducteur de frottement, de préférence dans lequel des conduites pour le milieu réducteur de frottement sont réalisées séparément et suivent le parcours du dispositif ou dans lequel des conduites pour le milieu réducteur de frottement sont intégrées dans des parties du dispositif, et/ou
dans lequel le dispositif comprend des canaux pour l'alimentation d'un gaz, dans lequel le dispositif est de préférence équipé d'ouvertures (29, 58, 59) pour diriger un flux de gaz, et/ou
dans lequel le dispositif comprend un dispositif de nettoyage sous la forme d'au moins une buse, qui est agencée au-dessous d'une voie de déplacement des corps (6) et qui est conçue pour nettoyer les corps (6), de préférence dans lequel la au moins une buse peut être alimentée en un milieu de nettoyage et/ou la au moins une buse est disposée dans une zone dans laquelle, par coopération du dispositif avec les corps (6), leurs ouvertures de corps sont inclinées vers le bas, et/ou
dans lequel l'électronique, telle que des capteurs sans contact, des dispositifs de détection optique, des étiquettes RFID, est intégrée dans le dispositif, dans lequel l'électronique est intégrée au moyen du procédé de fabrication générative ou dans lequel l'électronique est conçue modulaire et interchangeable, et/ou dans lequel le dispositif peut être alimenté avec un milieu de nettoyage, tel qu'un milieu de nettoyage désinfectant, de l'eau sous haute pression, dans lequel de préférence le milieu de nettoyage est acheminé par une pluralité de canaux et d'ouvertures afin d'assurer une humidification prédéterminée du dispositif, et/ou
dans lequel le dispositif (35) est agencé sur un corps de base (36), dans lequel le corps de base (36) se compose de préférence d'une matière plastique recyclée et/ou le rapport pondéral du dispositif (35) au corps de base (36) est supérieur à 50 %, supérieur à 25 % ou supérieur à 10 %.

10. Dispositif selon l'une quelconque des revendications 1 à 9, dans lequel le dispositif est composé de plusieurs modules, dans lequel de préférence dans lequel un assemblage est effectué par vissage, collage, soudage ou par un procédé génératif.

11. Installation avec :
- au moins deux dispositifs selon l'une quelconque des revendications 1 à 10, dans laquelle lesdits au moins deux dispositifs sont agencés en parallèle,
- un dispositif de transport,
- un dispositif de commande qui est conçu pour commander le dispositif de transport conformément à une instruction de commande et ainsi alimenter sélectivement le corps d'un des au moins deux dispositifs.

12. Installation selon la revendication 11, dans laquelle le dispositif de transport comprend un aiguillage destiné à dévier un trajet de transport d'un corps.

13. Installation selon la revendication 11, dans laquelle le dispositif de transport est conçu pour déplacer horizontalement les au moins deux dispositifs.

14. Ligne de traitement pour contenants en PET avec :
- une voie de processus,
- un stock de préformes,
- un four de préforme d'une machine de soufflage par étirage
**caractérisée par**
un dispositif selon l'une quelconque des revendications 1 à 10, agencé dans le trajet de processus entre le palier de préforme et le four de préforme.

15. Ligne de traitement pour contenants en PET avec :
- une voie de processus,
- un stock de fermeture de contenants,
- un dispositif de fermeture pour fermer des contenants en PET avec les fermetures de contenant, **caractérisée par** :
un dispositif selon l'une quelconque des revendications 1 à 10, agencé dans le trajet de processus entre le stock de fermetures de contenant et le dispositif de fermeture.
